# EUROPEAN PATENT SPECIFICATION

(11) **EP 3 113 530 B1**
(45) Date of publication and mention of the grant of the patent: **19.12.2018**
(21) Application number: 15306037.1
(22) Date of filing: 30.06.2015
(51) Int. Cl.: H04W 16/14, H04W 74/08

(54) **A WIRELESS COMMUNICATIONS NODE, AND METHOD OF RESERVING A TIME PERIOD FOR COMMUNICATIONS ON A SPECTRUM BAND SHARED BETWEEN TWO DIFFERENT WIRELESS NETWORK TECHNOLOGIES**
DRAHTLOSKOMMUNIKATIONSKNOTEN UND VERFAHREN ZUR RESERVIERUNG EINES ZEITRAUMS FÜR KOMMUNIKATIONEN ÜBER EIN FREQUENZBAND DAS ZWISCHEN ZWEI UNTERSCHIEDLICHEN FUNKNETZ TECHNOLOGIEN GETEILT IST
NOEUD DE COMMUNICATION SANS FIL ET PROCÉDÉ DE RÉSERVATION D'UNE PÉRIODE DE TEMPS POUR DES COMMUNICATIONS SUR UNE BANDE DE FRÉQUENCE PARTAGÉE ENTRE DEUX TECHNOLOGIES DE COMMUNICATIONS SANS FIL DIFFÉRENTES

(43) Date of publication of application: 04.01.2017
(73) Proprietor: Alcatel Lucent, 91620 Nozay (FR)
(72) Inventor: HO, Lester, Dublin, 15 (IE); LOPEZ-PEREZ, David, New Jersey, NJ 07974-0636 (US); CLAUSSEN, Holger, Dublin, 15 (IE)
(74) Representative: Nokia EPO representatives

(56) References cited:
- US-A1- 2014 126 504
- US-A1- 2015 063 099
- Rupasinghe Nadisanka: "WiFi and LTE Coexistence in the Unlicensed Spectrum", FIU Electronic Theses and Dissertations. Paper, 26 March 2015 (2015-03-26), pages 1-65, XP055245428, Retrieved from the Internet: URL:http://digitalcommons.fiu.edu/cgi/view content.cgi?article=2984&context=etd [retrieved on 2016-01-27]
- RAPEEPAT RATASUK ET AL: "License-exempt LTE deployment in heterogeneous network", WIRELESS COMMUNICATION SYSTEMS (ISWCS), 2012 INTERNATIONAL SYMPOSIUM ON, IEEE, 28 August 2012 (2012-08-28), pages 246-250, XP032263759, DOI: 10.1109/ISWCS.2012.6328367 ISBN: 978-1-4673-0761-1
- HUAWEI ET AL: "Motivation for new work item proposal on Licensed-Assisted Access to Unlicensed Spectrum", 3GPP DRAFT; RP-150704 MOTIVATION FOR NEW WORK ITEM PROPOSAL ON LICENSED-ASSISTED ACCESS TO UNLICENSED SPECTRUM, 3RD GENERATION PARTNERSHIP PROJECT (3GPP), MOBILE COMPETENCE CENTRE ; 650, ROUTE DES LUC , vol. TSG RAN, no. Malmö; 20150615 - 20150618 15 June 2015 (2015-06-15), XP050984561, Retrieved from the Internet: URL:http://www.3gpp.org/ftp/Meetings_3GPP_ SYNC/RAN/Docs/ [retrieved on 2015-06-15]

## Description

### Field of the Invention

The present invention relates to telecommunications, in particular to wireless telecommunications.

### Description of the Related Art

When Long Term Evolution (LTE) and WiFi nodes are deployed in an area and they use the same frequency band, the WiFi nodes tend to stay in listening mode whilst receiving interference from the LTE network, waiting for a channel access opportunity.

For example, in some simulations as described in Cavalcante, AM.; Almeida, E.; Vieira, R.D.; Chaves, F.; Paiva, R.C.D.; Abinader, F.; Choudhury, S.; Tuomaala, E.; Doppler, K., "Performance Evaluation of LTE and WiFi Coexistence in Unlicensed Bands," Vehicular Technology Conference (VTC Spring), 2013 IEEE 77th, vol., no., pp.1,6, 2-5 June 2013, WiFi nodes coexisting with LTE nodes in a typical indoor scenario spend at least 96% of the time in listening mode due to inter-Radio Access Technology (inter-RAT) interference. This significantly degrades WiFi performance.

Various proposals have been made to enhance LTE and WiFi coexistence. These known methods mostly rely on sacrificing some resources at the LTE network in order to mitigate the LTE interference to the WiFi network and so allow WiFi transmissions. Specifically, one known proposal is based on using an LTE blank sub-frame and another known proposal is based on uplink power control. These are briefly described in turn as follows.

An approach based on using a LTE blank subframe is presented in Almeida, E.; Cavalcante, AM.; Paiva, R.C.D.; Chaves, F.S.; Abinader, F.M.; Vieira, R.D.; Choudhury, S.; Tuomaala, E.; Doppler, K., "Enabling LTE/WiFi coexistence by LTE blank subframe allocation," Communications (ICC), 2013 IEEE International Conference on, vol., no., pp.5083,5088, 9-13 June 2013. In this approach, a modified version of an LTE Almost Blank Sub-frame (ABS) is proposed to allow WiFi version of an LTE Almost Blank Sub-frame (ABS) is proposed to allow WiFi coexistence. This modified ABS does not include reference signals, so is effectively a silent LTE subframe (it being assumed that reference signals are not required for legacy support). During these silent subframes, referred to here as blank subframes, WiFi nodes are able to detect that the channel is vacant as channel energy is below the threshold, and therefore are able to then transmit. In this way, LTE dominance over the available spectrum is reduced. A disadvantage for LTE networks is, of course, the loss of time for LTE transmissions, which inevitably somewhat decreases the LTE data throughput per user.

A second known approach is based on uplink power control as described, for example in Chaves, F.S.; Almeida, E.P.L.; Vieira, R.D.; Cavalcante, AM.; Abinader, F.M.; Choudhury, S.; Doppler, K., "LTE UL Power Control for the Improvement of LTE/WiFi Coexistence," Vehicular Technology Conference (VTC Fall), 2013 IEEE 78th , vol., no., pp.1,6, 2-5 Sept. 2013.

In this approach, LTE uplink (UL) power control is used to improve LTE and WiFi coexistence. This is done by introducing an additional factor to conventional LTE UL power control so that a controlled decrease of LTE UL transmit powers is carried out according to interference measurements, so giving opportunities for WiFi transmissions. This approach is flexible as the value of the factor may be adjusted to adjust the balance between LTE and WiFi transmissions. This approach may provide similar or better performance for both LTE and WiFi networks than the LTE blank sub-frame approach mentioned above.

United States Patent Application Publications US2015/0063099A1 and US2014/0126504A1 provide technical background.

It is known from US2014/0126504A1 to provide a method of reserving a time period for communications, the method comprising a node of a first technology sending a control frame (Wifi frame) according to a second technology indicating the time period during which nodes of the second technology should not make transmissions so as to reserve the time period for communications according to the first technology with the node of the first technology,
in which the second technology is WiFi, said nodes of the second technology being WiFi nodes, and the control frame is a WiFi frame indicating the time period to be applied at the WiFi nodes.

### Summary

The present invention is characterised over the disclosure of US2014/0126504A1 in that the node according to the first technology detects transmissions of the WiFi nodes, and to prevent collisions with transmissions of the WiFi nodes the control frame is sent during a WiFi Distribution Inter-Frame Space, DIFS, that follows a WiFi Acknowledgement frame.

The reader is referred to the appended independent claims. Some preferred features are laid out in the dependent claims.

An example of the present invention is a method of reserving a time period for communication, the method comprising a node of a first technology sending a control frame according to a second technology indicating the time period during which nodes of the second technology should not make transmissions so as to reserve the time period for communications according to the first technology with the node of the first technology.

Communications with the node of the first technology may mean communications to and/or from the node of the first technology.

Preferably, the control frame is sent dependent upon the node of a first technology determining that there is data to be communicated according to the first technology to or from said node.

Preferably the first technology is a Long Term Evolution, LTE, cellular wireless, said node of the first technology being an LTE node.

Preferably the second technology is WiFi, said nodes of the second technology being WiFi nodes, and the control frame is a WiFi frame indicating the time period to be applied at the WiFi nodes. Preferably the time period is indicated as duration of a timer to be applied at each WiFi node. Preferably the timer is a Network Allocation Vector, NAV, timer. Preferably the node according to the first technology detects transmissions of the WiFi nodes, and to prevent collisions with transmissions of the WiFi nodes, the control frame is sent during a WiFi Inter-Frame Space that follows a WiFi Acknowledgement frame.

Preferably upon determining that there is data to be communicated to or from said node according to a first technology, the node of the first technology determines said time period according to a first technology traffic to second technology traffic balancing scheme before sending the control frame. Preferably, the traffic balancing scheme comprises the node of the first technology estimating level of second technology traffic by detecting communications which are with the second technology nodes. Preferably the traffic balancing scheme comprises determining a target ratio between first technology traffic and second technology traffic, and selecting the time period so as to approach the target ratio. Preferably upon said determining that there is data to be communicated to or from said node according to a first technology, the node sends the control frame at a time determined according to the first technology traffic to second technology traffic balancing scheme.

Some embodiments provide a method of controlling transmissions of WiFi nodes by virtual carrier sensing triggered by fake WiFi frames transmitted by Long Term Evolution in Unlicensed spectrum (LTE-U) nodes. This provided for enhanced LTE and WiFi coexistence.

In some embodiments, the LTE node is able to control scheduling of WiFi transmissions for interworking of LTE and WiFi networks using the same frequency spectrum.

In some embodiments, a fake WiFi frame is transmitted by the LTE-U node to trigger virtual carrier sensing in WiFi nodes to indirect control the behaviour of WiFi nodes within reception range of the LTE-U node. In effect the LTE-U node "silence" the WiFi nodes for a selected amount of time (up to a maximum of 32, 768 microseconds) in order to schedule LTE transmissions, on uplink and/or downlink, without causing traffic collisions with the neighbouring WiFi nodes.

In some embodiments the LTE-U node is equipped with the capability of encode and transmit a WiFi frame that can be received and decoded by any WiFi nodes sharing the frequency channel. This WiFi frame may contain enough information to enable its "duration" field to be read by the WiFi nodes so that their NAV timers are set correctly.

In some embodiments, it may be considered that the frequency channel is bookable by LTE-U nodes and makes WiFi schedulable.

Some embodiments allow LTE nodes to control transmissions of WiFi nodes through manipulation of their virtual carrier sensing mechanisms, enabling a wide array of LTE to WiFi traffic balancing schemes to be applied.

In some embodiments, silencing WiFi nodes through virtual carrier sensing allows more precise control than through physical carrier sensing where a WiFi node detects by sniffing whether or not the channel is in use; also failures of WiFi transmissions that may be triggered in short gaps in detected LTE transmissions using a physical carrier sensing approach are avoided, and the time gaps left by the LTE-U node for WiFi transmissions may be used more efficiently.

Examples of the present invention also relates to corresponding apparatus. For example, a node of a first technology is configured to send a control frame according to a second technology, the control frame indicating a time period during which nodes of the second technology should not make transmissions so as to reserve the time period for communications according to the first technology with the node of the first technology.

Preferably the node of a first technology is configured to send the control frame dependent upon the node of the first technology determining that there is data to be communicated according to the first technology to or from said node.

Preferably the node of a first technology in which the control frame is a WiFi frame indicating the time period to be applied at nodes of the second technology which are WiFi nodes. Preferably the node according to the first technology is configured to detect transmissions of the WiFi nodes, and to prevent collisions with transmissions of the WiFi nodes the node according to the first technology is configured to send the control frame during a WiFi Inter-Frame Space that follows a WiFi Acknowledgement frame.

Preferably upon determining that said node has first technology data for transmission, the node of the first technology determines said time period according to a first technology traffic to second technology traffic balancing scheme before sending the control frame.

### Brief Description of the Drawings

An embodiment of the present invention will now be described by way of example and with reference to the drawings, in which:
Figure 1 is a diagram illustrating a coexistence scenario in which both an LTE base station and a WiFi access point are deployed using the same frequency band in an area, and
Figure 2 is a diagram illustrating operation of the apparatus shown in Figure 1.

### Detailed Description

When considering a known system (not shown) based on using an LTE blank sub-frame, the inventors realised that, in that known system short gaps in LTE transmissions would trigger the WiFi network to start transmitting. This would cause interference to the LTE network, and when LTE resumes transmission, the WiFi node would to go into a phase of exponentially increasing backoff times, which would be inefficient.

When considering a second known system (not shown) based on uplink power control (not shown), the inventors realised that in that known system there would be significant gaps in transmission due to carrier sensing by the WiFi network after the LTE network had finished its transmission. This would be inefficient.

### Carrier Sensing

The inventors realised that WiFi nodes use a listen-before-talking (LBT) approach to accessing the shared medium, namely the frequency channel. Listening in this sense means carrier sensing to determine whether the frequency channel is available. There are two types of carrier sensing available in the 802.11 standard, namely physical carrier sensing and virtual carrier sensing. These are briefly described in turn as follows.

Physical carrier sensing is where radio frequency measurements are made by RF detection hardware to determined whether another potentially-interfering node is transmitting or not.

Virtual carrier sensing is, on the other hand, where timers are used to determine when the frequency channel is occupied with transmissions of another node. WiFi frames carry a duration field, which is used to reserve the frequency channel for a given fixed time period by setting a timer known as the Network Allocation Vector (NAV).

A WiFi node will not transmit at times for which either physical or virtual sensing determines that the frequency channel is not idle, in other words, already in use.

### 'Fake' WiFi frame Approach

The inventors realised that it was possible to enhance the co-existence of Long Term Evolution in Unlicensed spectrum (LTE-U) and WiFi through the transmission of a fake WiFi frame by the LTE-U node in order to control the behaviour of WiFi nodes. Specifically virtual carrier sensing by the WiFi nodes with reception range of the LTE-U node would cause the WiFi nodes to receive the fake WiFi frame and determine from that frame that they should not themselves transmit.

In this way, the LTE-U node effectively silences the WiFi nodes of a set amount of time (up to a maximum of 32,768 microseconds) in order to schedule its own transmissions, on uplink to the LTE-U, and/or downlink from the LTE-U, without causing interference collisions to the neighbouring WiFi nodes.

The LTE-U node is equipped with the capability to encode and transmit WiFi frames for reception and decoding by WiFi nodes sharing the frequency channel. The WiFi frames transmitted by the LTE-U node contain enough information to enable the "Duration" field in the frames to be read by WiFi nodes so that they then set their NAV timers correctly.

It will be understood that this approach improves the interworking of LTE and WiFi nodes on the shared frequency band since it effectively allows the channel to be booked, in other words temporarily reserved for LTE, and makes the WiFi transmissions schedulable.

### Example

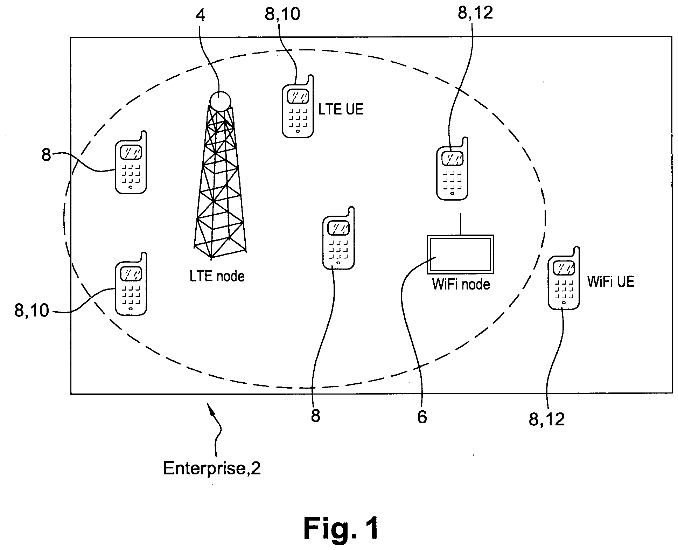

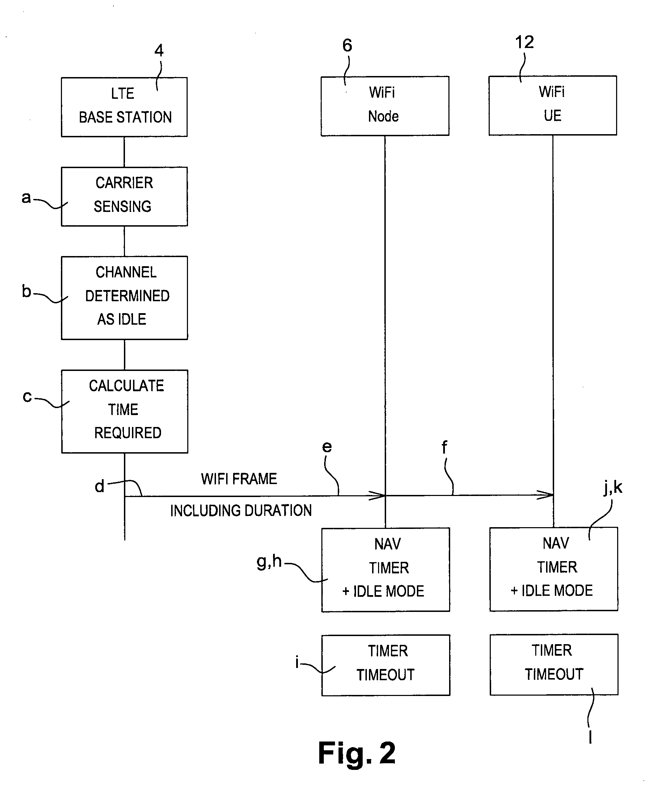

The example of an LTE-U node booking the frequency channel is described in more detail with reference to Figures 1 and 2.

As shown in Figure 1, an enterprise environment 2 is provided (such as an office or other business premises). Within the enterprise environment 2, an LTE-U base station 4 and WiFi access points 6 are provided. In Figure 1, only one WiFi node is shown for simplicity. The LTE-U base station 4 and WiFi access points 6 use the same frequency band and are located at different physical positions within the enterprise environment 2 but have overlapping radio coverage. Within the enterprise environment 2, there are user terminals (UE) 8, including LTE user terminals 10 and WiFi user terminals (WiFi UE) 12.

The LTE-U base station 4 includes a generator of fake WiFi frames. These are frames with the format expected of a WiFi frame and including a "Duration" field set to a desired value. The LTE-U base station 4 also includes a transmitter to transmit the generated fake WiFi frames.

### WiFi Sniffing

The LTE-U base station 4 is also configured to receive and decode WiFi control information contained within transmitted WiFi frames so as to determine WiFi frame control fields in those headers. This can be considered as WiFi signal sniffing. By detecting the control fields, for example the Physical Layer Convergence Protocol (PLCP) and Media Access Control (MAC) headers, information is gleaned by LTE-U node for example of the rate and length of WiFi frames, MAC addresses and Service Set Identification (SSID) information. This information is used by the LTE-U node to estimate the traffic load on neighbouring WiFi nodes.

Referring now to Figure 2, the LTE-U node 4 includes a WiFi channel sensor that determines whether the channel is idle or in use by carrier sensing (step a), namely physical carrier sensing in this example, or in another similar example, by virtual carrier sensing.

As mentioned previously, physical carrier sensing is where radio frequency measurements are made by RF detection hardware to determined whether another potentially-interfering node is transmitting or not. Virtual carrier sensing is, on the other hand, where a timer is used to calculate when the frequency channel is expected to be occupied with transmissions of another node. WiFi frames carry a duration field, which is used to reserve the frequency channel for a given fixed time period by setting a timer known as the Network Allocation Vector (NAV) in the respective WiFi node 6 or WiFi user terminal 12.

### Calculating Time Required for LTE transmission

If the LTE-U node determines (step b) that the channel is idle, the LTE-U node assumes the channel is ready for LTE transmission. The LTE-U node then calculates (step c) the amount of time for which it needs the channel for its own transmission, taking in to account the asynchronicity, in other words, difference in timing between the LTE node and the WiFi nodes, whilst being fair to the WiFi nodes as explained below.

### 'Fake' WiFi Frame transmission, then LTE transmission

The LTE-U node 4 then transmits (step d) a WiFi frame which includes a field indicating duration, the duration indicated being that amount of time calculated as required. In this example, the WiFi frame is sent during a (WiFi) Distribution Coordination Function (DCF) Inter-Frame Space (DIFS) that follows a WiFi ACKnowledgement frame. This is so as to prevent collisions with transmissions of the WiFi nodes 6.

This "fake" WiFi frame that the LTE-U node 4 transmits is received (steps e) by the WiFi nodes 6. This triggers the WiFi nodes 6 to each start (step g) its own respective NAV timer to run for the indicated duration and go into (step h) WiFi idle mode until its NAV timer times out (step i).

The "fake" WiFi frame is also received (steps f) by the WiFi user terminals 12. This triggers the WiFi user terminals 12 to each start (step j) its own respective NAV timer to run for the indicated duration and go into (step k) WiFi idle mode until its NAV timer times out (step *l*).

The LTE-U node schedules its own transmissions for during this WiFi idle mode period.

### Fairness

Since the use of the fake WiFi frame from the LTE-U node triggers the NAV timers in the WiFi nodes 6 and WiFi user terminals 12 so preventing them from transmitting, measures are taken to prevent the LTE-U node from effectively abusing the WiFi nodes and WiFi user terminal 12 by being unfair or greedy in its control of transmission periods, but instead seek to ensure "fairness".

Information on the rate and length of WiFi packets is contained within the Physical Layer Convergence Protocol (PLCP) and Media Access Control (MAC) headers of WiFi transmissions which may be read by all WiFi nodes/user terminals.

As mentioned previously above, by using a process of WiFi signal sniffing, the LTE-U node identifies the neighbouring WiFi nodes and WiFi user terminals, and learns their traffic load characteristics. Specifically, by detecting the control fields, for example the Physical Layer Convergence Protocol (PLCP) and Media Access Control (MAC) headers, information is gleaned by LTE-U node of the rate and length of WiFi frames, and also MAC addresses and Service Set Identification (SSID) information. This information is used by the LTE-U node to estimate the traffic load on neighbouring WiFi nodes.

With this knowledge, and knowledge of its own load requirements, the LTE-U node determines a fair, in other words proportionate, balance between LTE-U transmission time and WiFi transmission time. In this example, this is done by setting a ratio of the time in which WiFi nodes and LTE-U nodes use the frequency channel based on the number of user terminals connected per node and the number of bits transmitted in a unit time. Transmissions are then scheduled so as to approach or achieve this ratio.

In this example, the LTE-U node is the LTE base station which transmits data downlink using LTE-communication mode.

### Another Example

In another similar example (not shown), the LTE-U node is the LTE user terminal which transmits data uplink.

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of reserving a time period for communications, the method comprising a node (4) of a first technology sending a control frame (d) according to a second technology indicating the time period during which nodes (6) of the second technology should not make transmissions so as to reserve the time period for communications according to the first technology with the node (4) of the first technology,
in which the second technology is WiFi, said nodes (6) of the second technology being WiFi nodes, and the control frame is a WiFi frame indicating the time period to be applied at the WiFi nodes,
**characterised in that** the node (4) according to the first technology detects transmissions of the WiFi nodes (6), and to prevent collisions with transmissions of the WiFi nodes (6) the control frame is sent during a WiFi Distribution Inter-Frame Space, DIFS, that follows a WiFi Acknowledgement frame.

2. A method according to claim 1, in which the control frame is sent dependent upon the node (4) of a first technology determining that there is data to be communicated according to the first technology to or from said node (4).

3. A method according to claim 1 or claim 2, in which the first technology is a Long Term Evolution, LTE, cellular wireless, said node (4) of the first technology being an LTE node.

4. A method according to claim 1, in which the time period is indicated as duration of a timer to be applied at each WiFi node.

5. A method according to claim 4, in which the timer is a Network Allocation Vector, NAV, timer.

6. A method according to any preceding claim, in which upon determining that that there is data to be communicated to or from said node (4) according to a first technology, the node (4) according to the first technology determines said time period according to a first technology traffic to second technology traffic balancing scheme before sending the control frame.

7. A method according to claim 6, in which the traffic balancing scheme comprises the node (4) of the first technology estimating level of second technology traffic by detecting communications which are with the second technology nodes.

8. A method according to claim 6 or claim 7, in which the traffic balancing scheme comprises determining a target ratio between first technology traffic and second technology traffic, and selecting the time period so as to approach the target ratio.

9. A method according to any of claims 6 to 8, in which upon said determining that there is data to be communicated to or from said node (4) according to a first technology, the node sends the control frame at a time determined according to the traffic balancing scheme.

10. A wireless communications node (4) of a first technology configured to send a control frame according to a second technology, the control frame (d) indicating a time period during which nodes (6) of the second technology should not make transmissions so as to reserve the time period for communications according to the first technology with the node (4) of the first technology,
in which control frame is a WiFi frame indicating the time period to be applied at nodes (6) of the second technology which are WiFi nodes,
**characterised in that** the node (4) according to the first technology is configured to detect transmissions of the WiFi nodes (6), and to prevent collisions with transmissions of the WiFi nodes (6), the node (4) according to the first technology is configured to send the control frame during a WiFi Distribution Inter-Frame Space, DIFS, that follows a WiFi Acknowledgement frame.

11. A wireless communications node of a first technology according to claim 10, configured to send the control frame dependent upon the node of the first technology determining that there is data to be communicated according to the first technology to or from said node.

12. A wireless communications node of a first technology according to claim 10 or claim 11, comprising a Long Term Evolution, LTE, user terminal.

## Patentansprüche

1. Verfahren zum Reservieren eines Zeitraums für Kommunikationen, das Verfahren umfassend einen Knoten (4) einer ersten Technologie, der einen Steuerrahmen (d) gemäß einer zweiten Technologie sendet, der den Zeitraum anzeigt, während dem Knoten (6) der zweiten Technologie keine Übertragungen durchführen sollten, um den Zeitraum für Kommunikationen gemäß der ersten Technologie mit dem Knoten (4) der ersten Technologie zu reservieren, wobei die zweite Technologie WiFi ist, wobei die Knoten (6) der zweiten Technologie WiFi-Knoten sind und der Steuerrahmen ein WiFi-Rahmen ist, der den an den WiFi-Knoten anzuwendenden Zeitraum anzeigt,
**dadurch gekennzeichnet, dass** der Knoten (4) gemäß der ersten Technologie Übertragungen der WiFi-Knoten (6) erkennt und, um Kollisionen mit Übertragungen der WiFi-Knoten (6) zu verhindern, der Steuerrahmen während eines WiFi-Verteilungszwischenrahmenabstands (Distribution Inter-Frame Space), DIFS, der auf einen WiFi-Bestätigungsrahmen folgt, gesendet wird.

2. Verfahren nach Anspruch 1, in dem der Steuerrahmen abhängig davon gesendet wird, dass der Knoten (4) einer ersten Technologie bestimmt, dass Daten gemäß der ersten Technologie zu oder von dem Knoten (4) zu kommunizieren sind.

3. Verfahren nach Anspruch 1 oder Anspruch 2, in dem die erste Technologie eine drahtlose Long Term Evolution(LTE)-Mobilfunktechnologie ist, wobei der Knoten (4) der ersten Technologie ein LTE-Knoten ist.

4. Verfahren nach Anspruch 1, in dem der Zeitraum als eine an jedem WiFi-Knoten anzuwendende Dauer eines Zeitgebers angegeben ist.

5. Verfahren nach Anspruch 4, in dem der Zeitgeber ein Netzbelegungsvektor(Network Allocation Vector, NAV)-Zeitgeber ist.

6. Verfahren nach einem vorhergehenden Anspruch, in dem, nach einem Bestimmen, dass Daten gemäß einer ersten Technologie zu oder von dem Knoten (4) zu senden sind, der Knoten (4) gemäß der ersten Technologie den Zeitraum gemäß einem Ausgleichsschema für Verkehr einer ersten Technologie zu Verkehr einer zweiten Technologie bestimmt, bevor der Steuerrahmen gesendet wird.

7. Verfahren nach Anspruch 6, in dem das Verkehrsausgleichsschema umfasst, dass der Knoten (4) der ersten Technologie eine Ebene des Verkehrs einer zweiten Technologie schätzt, indem er Kommunikationen erkennt, die mit den Knoten der zweiten Technologie stattfinden.

8. Verfahren nach Anspruch 6 oder Anspruch 7, in dem das Verkehrsausgleichsschema ein Bestimmen eines Zielverhältnisses zwischen Verkehr einer ersten Technologie und Verkehr einer zweiten Technologie und ein Auswählen des Zeitraums zum Annähern an das Zielverhältnis umfasst.

9. Verfahren nach einem der Ansprüche 6 bis 8, in dem, nach dem Bestimmen, dass Daten gemäß einer ersten Technologie zu oder von dem Knoten (4) zu senden sind, der Knoten den Steuerrahmen zu einer gemäß dem Verkehrsausgleichsschema bestimmten Zeit sendet.

10. Drahtloser Kommunikationsknoten (4) einer ersten Technologie, der dazu konfiguriert ist, einen Steuerrahmen gemäß einer zweiten Technologie zu senden, wobei der Steuerrahmen (d) einen Zeitraum anzeigt, während dem Knoten (6) der zweiten Technologie keine Übertragungen durchführen sollten, um den Zeitraum für Kommunikationen gemäß der ersten Technologie mit dem Knoten (4) der ersten Technologie zu reservieren,
wobei der Steuerrahmen ein WiFi-Rahmen ist, der den an Knoten (6) der zweiten Technologie, die WiFi-Knoten sind, anzuwendenden Zeitraum anzeigt,
**dadurch gekennzeichnet, dass** der Knoten (4) gemäß der ersten Technologie dazu konfiguriert ist, Übertragungen der WiFi-Knoten (6) zu erkennen und, um Kollisionen mit Übertragungen der WiFi-Knoten (6) zu verhindern, der Knoten (4) gemäß der ersten Technologie dazu konfiguriert ist, den Steuerrahmen während eines WiFi-Verteilungszwischenrahmenabstands (Distribution Inter-Frame Space), DIFS, der auf einen WiFi-Bestätigungsrahmen folgt, zu senden.

11. Drahtloser Kommunikationsknoten einer ersten Technologie nach Anspruch 10, der dazu konfiguriert ist, den Steuerrahmen abhängig davon zu senden, dass der Knoten der ersten Technologie bestimmt, dass Daten gemäß der ersten Technologie zu oder von dem Knoten zu kommunizieren sind.

12. Drahtloser Kommunikationsknoten einer ersten Technologie nach Anspruch 10 oder Anspruch 11, umfassend ein Long Term Evolution(LTE)-Benutzerendgerät.

## Revendications

1. Procédé de réservation d'une période de temps pour des communications, le procédé comprenant un noeud (4) d'une première technologie envoyant une trame de commande (d) selon une seconde technologie indiquant la période de temps pendant laquelle des noeuds (6) de la seconde technologie ne devraient pas établir des transmissions de sorte à réserver la période de temps pour des communications selon la première technologie avec le noeud (4) de la première technologie,
dans lequel la seconde technologie est le Wi-Fi, lesdits noeuds (6) de la seconde technologie étant des noeuds Wi-Fi et la trame de commande est une trame Wi-Fi indiquant la période de temps à appliquer aux noeuds Wi-Fi,
**caractérisé en ce que** le noeud (4) selon la première technologie détecte des transmission des noeuds Wi-Fi (6) et pour empêcher des collisions avec des transmissions des noeuds Wi-Fi (6), la trame de commande est envoyée pendant un espace inter-trames de distribution par Wi-Fi (DIFS) qui suit une trame d'accusé de réception par Wi-Fi.

2. Procédé selon la revendication 1, dans lequel la trame de commande est envoyée en fonction du noeud (4) d'une première technologie déterminant qu'il y a des données qui doivent être communiquées selon la première technologie au dit noeud (4) ou à partir de ce dernier.

3. Procédé selon la revendication 1 ou la revendication 2, dans lequel la première technologie est une technologie sans fil cellulaire d'évolution à long terme (LTE), ledit noeud (4) de la première technologie étant un noeud LTE.

4. Procédé selon la revendication 1, dans lequel la période de temps est indiquée sous la forme d'une durée d'un temporisateur à appliquer à chaque noeud Wi-Fi.

5. Procédé selon la revendication 4, dans lequel le temporisateur est un temporisateur de vecteur d'attribution de réseau (NAV).

6. Procédé selon l'une quelconque des revendications précédentes, dans lequel, lors de la détermination qu'il y a des données qui doivent être communiquées audit noeud (4) ou à partir de ce dernier selon une première technologie, le noeud (4) selon la première technologie détermine ladite période de temps selon un schéma d'équilibrage entre le trafic de la première technologie et le trafic de la seconde technologie avant d'envoyer la trame de commande.

7. Procédé selon la revendication 6, dans lequel le schéma d'équilibrage de trafic comprend le noeud (4) de la première technologie estimant le niveau du trafic de la seconde technologie en détectant des communications qui se font avec les noeuds de la seconde technologie.

8. Procédé selon la revendication 6 ou la revendication 7, dans lequel le schéma d'équilibrage de trafic comprend la détermination d'un rapport cible entre le trafic de la première technologie et le trafic de la seconde technologie et la sélection de la période de temps de sorte à s'approcher du rapport cible.

9. Procédé selon l'une quelconque des revendications 6 à 8, dans lequel, lors de ladite détermination qu'il y a des données qui doivent être communiquées audit noeud (4) ou à partir de ce dernier selon une première technologie, le noeud envoie la trame de commande à un moment déterminé selon le schéma d'équilibrage de trafic.

10. Noeud de communication sans fil (4) d'une première technologie configuré pour envoyer une trame de commande selon une seconde technologie, la trame de commande (d) indiquant une période de temps pendant laquelle des noeuds (6) de la seconde technologie ne devrait pas établir des transmissions de sorte à réserver la période de temps pour des communications selon la première technologie avec le noeud (4) de la première technologie,
dans lequel la trame de commande est une trame Wi-Fi indiquant la période de temps à appliquer à des noeuds (6) de la seconde technologie qui sont des noeuds Wi-Fi,
**caractérisé en ce que** le noeud (4) selon la première technologie est configuré pour détecter des transmissions des noeuds Wi-Fi (6) et pour empêcher des collisions avec des transmissions des noeuds Wi-Fi (6), le noeud (4) selon la première technologie est configuré pour envoyer la trame de commande pendant un espace inter-trames de distribution par Wi-Fi (DIFS) qui suit une trame d'accusé de réception de Wi-Fi.

11. Noeud de communication sans fil d'une première technologie selon la revendication 10, configuré pour envoyer la trame de commande en fonction du noeud de la première technologie déterminant qu'il y a des données qui doivent être communiquées selon la première technologie audit noeud ou à partir de ce dernier.

12. Noeud de communication sans fil d'une première technologie selon la revendication 10 ou la revendication 11, comprenant un terminal utilisateur d'évolution à long terme (LTE).
